# EUROPEAN PATENT APPLICATION

(11) **EP 3 506 068 A1**
(43) Date of publication of application: **03.07.2019**
(21) Application number: 18213578.0
(22) Date of filing: 18.12.2018
(51) Int. Cl.: G06F 3/041, H04M 1/02, G06F 3/01

(54) **DEVICES AND METHODS FOR DYNAMIC ASSOCIATION OF USER INPUT WITH MOBILE DEVICE ACTIONS**

(30) Priority: 29.12.2017 US 201715858903
(71) Applicant: Immersion Corporation, San Jose, CA 95134 (US)
(72) Inventor: ATTARI, Sanya, Fremont, CA 94539 (US); SWINDELLS, Colin, Palo Alto, CA 94303 (US)
(74) Representative: Hofstetter, Schurack & Partner

(57) **Abstract**

Devices and methods for dynamic association of user inputs to mobile device actions are provided. User sensing panels associated with a mobile device may detect the presence or contact of multiple hand parts. A signal from the user sensing panels indicative of the presence or contact may be associated with a mobile device action. To associate the signal with the mobile device action, a processor associated with the mobile device may determine the identities of the hand part and may recognize user gestures of the identified hand parts. A processor may cause the execution of the mobile device action upon receipt of the signal.

## Description

### FIELD OF THE INVENTION

The present invention is directed to devices and methods for dynamically associating user input with mobile device actions.

### BACKGROUND OF THE INVENTION

Mobile devices, such as smartphones, tablets, and the like, include various tactile user input elements, including, for example, buttons and switches. Such user input elements are frequently arranged around the sidewalls of the device in positions where a user's fingers may access them. Although phone designers may try to locate the user input elements in the most natural places for a user to access, a variety of factors may hinder this goal. Functional design constraints, such as the location of other internal device components, may force the location of user input elements away from optimal placement. Users may have different hand sizes, different hand shapes, differing numbers of fingers, and different ways of grasping a mobile device. Further, even optimal placement of user input elements requires users to hold the device in a correct orientation to access the user input elements.

Systems, devices, and methods consistent with embodiments described herein address these and other drawbacks that exist with conventional mobile device user input elements.

### BRIEF SUMMARY OF THE INVENTION

Systems, devices, and methods consistent with the disclosure provide dynamic association of user input with mobile device actions. Instead of fixed user input elements corresponding to specific device actions, e.g., a home button, volume buttons, etc., the system dynamically associates user inputs with mobile device actions according to the fingers and hand position a user has when holding the mobile device. When a user grasps the mobile device, the system detects and identifies the hand position and hand parts with which the user has grasped the device. The system may then receive input from the user based on a gesture, such as altered pressure, provided by one of the user's digits, regardless of that digit's current placement. Thus, for example, altered pressure from a user's right thumb may correspond to pressing a home button. When the user picks up the phone, the location of the right thumb is identified, and an alteredpressure from it, wherever its location, is identified as a home button press.

In an embodiment, a mobile device is provided. The mobile device includes at least one user sensing panel including a pressure sensor configured to generate a pressure signal in response to and indicative of a multi-contact touch, and at least one processor. The at least one processor is configured to receive the pressure signal indicative of the multi-contact touch generated by the at least one pressure sensor, associate the pressure signal with an action of the mobile device, cause the mobile device to execute the action, and output a haptic control signal associated with the multi-contact touch. The haptic control signal is configured to activate a haptic output device to cause a haptic effect.

In an embodiment, a method of dynamically associating user inputs to mobile device actions is provided. The method comprises generating, by a pressure sensor of at least one user sensing panel of a mobile device, a pressure signal in response to and indicative of a multi-contact touch, receiving, by at least one processor, the pressure signal indicative of the multi-contact touch generated by the at least one pressure sensor, associating, by the at least one processor, the pressure signal with an action of the mobile device, causing, by the at least one processor, the mobile device to execute the action, and outputting, by the at least one processor, a haptic control signal associated with the multi-contact touch, the haptic control signal being configured to activate a haptic output device to cause a haptic effect.

### BRIEF DESCRIPTION OF DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIG. 1 illustrates a mobile device in accordance with an embodiment hereof.
FIGS. 2A-2C illustrate several embodiments of user sensing panels in accordance with embodiments hereof.
FIG. 3 is a schematic illustration of the system of FIG. 1.
FIG. 4 illustrates hand and finger anatomy.
FIGS. 5A-5C illustrate various hand positions for gripping a mobile device.
FIG. 6 is an exemplary table of associations between user anatomy, user gestures, and mobile device actions in accordance with embodiments hereof.
FIG. 7 is a process diagram illustrating operation of a system for identifying user input gestures in accordance with an embodiment hereof.
FIG. 8 is a process diagram illustrating operation of a system for identifying user input gestures in accordance with an embodiment hereof.

### DETAILED DESCRIPTION OF THE INVENTION

Specific embodiments of the present invention are now described with reference to the figures, wherein like reference numbers indicate identical or functionally similar elements. The following detailed description is merely exemplary in nature and is not intended to limit the invention or the application and uses of the invention. Furthermore, there is no intention to be bound by any expressed or implied theory presented in the preceding technical field, background, brief summary or the following detailed description. Furthermore, although the following description is primarily directed to handheld computing devices, those skilled in the art would recognize that the description applies equally to other devices, including any devices that accept user input, such as computer peripheral devices.

Embodiments of the invention include a mobile device that dynamically associates user input with actions of a mobile device. This allows a user to provide input based on their digits or other hand parts gripping the mobile device, rather than based on specific buttons of the mobile device. Rather than gripping the mobile device and pressing a specific button to perform a certain action, e.g., power on/off, volume up/down, a user may grip the mobile device and perform the action by performing a gesture with a hand part, such as increasing pressure with a specific finger. For example, a user's right thumb may be selected to correspond to a mobile device "home" button. When the user grips the mobile device, regardless of how and where the right thumb is positioned, an altered, e.g., increased or decreased, pressure of the right thumb may be interpreted as a button press of the "home" button. Thus, the user's input with the right thumb, at any location, is dynamically associated with the mobile device actions corresponding to pressing a "home" button. Different digits and other hand parts (including the palm and ball of the thumb) may be selected to correspond to different mobile device actions. In accordance with embodiments hereof, combinations of digits and hand parts may correspond to a mobile device action. In further embodiments, a movement or gesture of a specific digit or hand part may correspond to a mobile device action.

A mobile device may be configured with a user sensing panel having one or more sensors for sensing a user's hand gripping the mobile device. A processor of the mobile device may determine which digits of the user are responsible for specific portions of a signal indicative of a multi-contact touch. For example, the processor may determine which aspects of the signal correspond to the user's index finger, ring finger, middle finger, little finger, and thumb when gripping the mobile device. The processor may then recognize user input actions such as virtual button presses and gestures performed by specific fingers. The processor may then cause the mobile device to execute mobile device actions corresponding to the input actions.

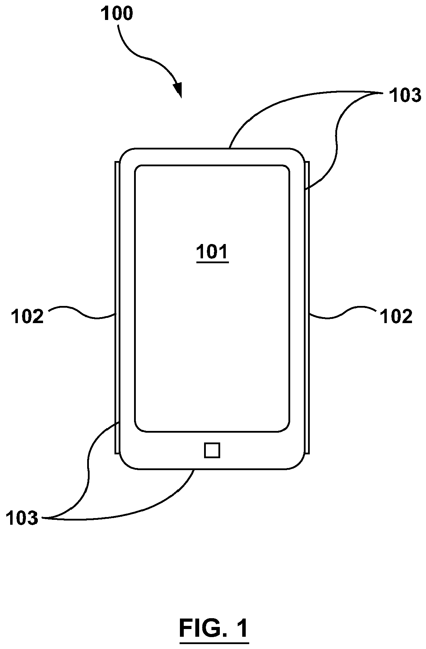

FIG. 1 illustrates a mobile device 100 in accordance with an embodiment hereof. Mobile device 100 includes a screen face 101, a user sensing panel 102, and sidewalls 103. Mobile device 100 may include a smartphone, tablet, phablet, gaming controller and/or any other type of mobile computing device or computing peripheral. The screen face 101 of the mobile device 100 may include a display, and mobile device 100 may further include any other components typically included in a mobile device, including, but not limited to, audio inputs and outputs, processors, buttons, and other components. Mobile device 100 includes sidewalls 103 extending along the sides, top, and bottom of the mobile device 100. The mobile device 100 of FIG. 1 includes a single screen face 101 and a back face (not shown). In other embodiments, the mobile device 100 may include two screen faces 101 on opposing sides of the mobile device.

The mobile device 100 includes at least one user sensing panel 102. The mobile device 100 may include a plurality of user sensing panels 102, in various configurations. In the embodiment of FIG. 1, the mobile device 100 includes two user sensing panels 102 extending along substantially an entire length of an opposing pair of sidewalls 103. The mobile device 100 may include three or four user sensing panels 102, each arranged on a different sidewall 103. In accordance with embodiments hereof, the mobile device 100 may include multiple user sensing panels 102 on a single sidewall 103. In accordance with embodiments hereof, the user sensing panels 102 may extend along at least a portion of the sidewalls 103, and may or may not extend along an entire length of the sidewalls 103. The user sensing panels 102 may be located on the sidewalls 103 of the mobile device 100, may cover the sidewalls 103 of the mobile device 100, may be arranged in direct contact on the sidewalls 103 of the mobile device 100, may be incorporated integrally with the sidewalls 103, may be included as part of the sidewalls 103, may be located so as to project through cutouts of the sidewalls 103, or may otherwise be arranged with respect to the sidewalls 103 so as to provide sensor areas along the sides of the mobile device 100 located substantially perpendicularly with respect to the screen face 101 of the mobile device 100.

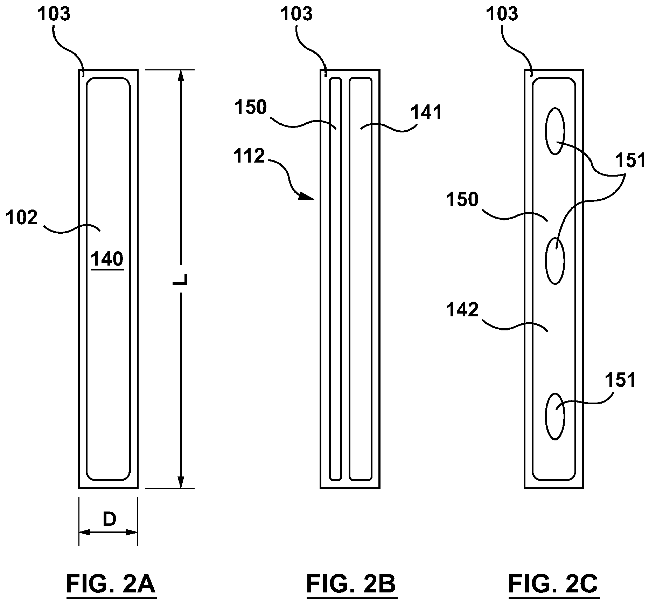

FIGS. 2A-2C illustrate several embodiments of user sensing panels 102 in accordance with embodiments hereof, the user sensing panels 102 are or include pressure sensors, proximity sensors, touch sensors, fingerprint readers, and any other sensors that may detect contact, pressure, and/or proximity from parts of a user's hand. FIG. 2A illustrates a sidewall 103 including the user sensing panel 102 consisting of a single pressure sensor 140 embodied as a pressure sensitive panel, or touch sensitive bar, extending along the sidewall 103. As illustrated, the user sensing panel 102 extends along substantially an entire length L of the sidewall 103 and along substantially an entire depth D of the sidewall 103. FIG. 2B illustrates a sidewall 103 including the user sensing panel 102 consisting of a pressure sensor 141 embodied as a pressure sensitive panel and a proximity sensor 150 arranged in parallel extending along the sidewall 103 over substantially an entire length of the sidewall 103. FIG. 2C illustrates a sidewall 103 including the user sensing panel 102 consisting of a pressure sensor 142 embodied as a pressure sensitive panel extending along the sidewall 103, over substantially an entire length of the sidewall 103, and having cut-outs to accommodate several proximity sensors 151 arranged therein. FIGS. 2A-2C are illustrative of various embodiments and are not limiting of the number, size, shape, and arrangement of sensors that may function as the user sensing panels 102. The sidewall 103, as illustrated in FIG. 2A, has a length L and a depth D.

In embodiments that include user sensing panels having pressure sensors or other sensors requiring contact, the sensors may be configured to generate a pressure signal in response to and indicative of a multi-contact touch. Signals indicative of a multi-contact touch may include location information indicating locations at which contact is made, pressure magnitude information indicating a pressure magnitude at the locations at which contact is made, movement indications indicating movement of the body part contacting the sensor, and/or contact area information, indicating a contact area at each location at which contact is made. In embodiments that include proximity sensors, the sensors may be configured to generate presence signals in response to and indicative of multiple presences, i.e., a multi-presence positioning. Signals indicative of a multi-presence positioning may include all of the same information as provided in a multi-contact touch signal as well as proximity information indicative of a non-contact proximity of a body part or other object. In accordance with an embodiment hereof, the user sensing panels 102 may include sensors from two or more of the categories discussed above, and may thus be configured for multi-modal sensing. For example, as illustrated in FIG. 2B, the user sensing panels 102 may include pressure sensor(s) configured to detect a multi-contact touch as well as proximity sensor(s) configured to detect the presence or proximity of one or more digits. A user may grasp the mobile device 100 with a hand or hands, using one or more of fingers, thumbs, including the ball of the thumb, palm, and any other part of the hand(s). When holding the mobile device 100, the user's fingers and hands may make contact with the pressure sensors of the user sensing panel(s) in multiple places, thus creating a multi-contact touch.

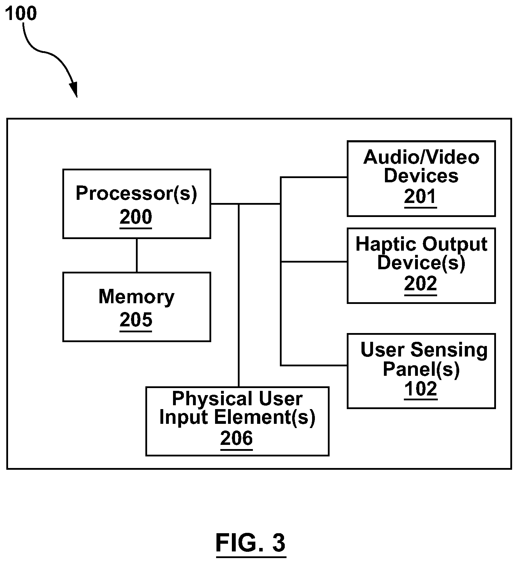

FIG. 3 illustrates a schematic of the mobile device 100. As illustrated in FIG. 3, the mobile device 100 may include one or more processor(s) 200, referred to herein variously as a processor or processors, and at least one memory unit 205. The mobile device 100 may further include one or more user sensing panels 102 as described above, as well as more traditional physical or manipulatable user input elements 206, including buttons, joysticks, triggers, microphones, switches, touch-screens, and others. The mobile device 100 may further include one or more audio and/or video output devices 201 and one or more haptic output devices 202. The audio and/or video output device 201 may include speakers, a display, and/or other components.

The mobile device 100 may carry out software instructions stored in the memory 205 and executed by the processor 200. The processor 200 may include one or more of any type of general purpose processor and may also be a processor specifically designed to identify user input gestures. The processor 200 may be the same processor that operates all functionality of the mobile device 100 and/or may include a specialty processor configured for the purposes discussed herein. The processor 200 may execute computer instructions to determine commands to send to various aspects of the mobile device 100 to carry out mobile device actions. Memory 205 may include one or more of any type of storage device or non-transitory computer-readable medium, such as but not limited to random access memory (RAM) or read-only memory (ROM). Memory 205 may also be located internal to the host processor, or any combination of internal and external memory.

In accordance with embodiments hereof, the mobile device 100 is a haptic enabled device. Haptic enabled devices include devices having one or more haptic output devices 202 for delivering a haptic effect to a user. Haptic enabled devices may be devices that include one or more haptic output devices 202 that directly receive haptic commands, for example, from the local processor 200 and/or from an external computer system, for actuation. Haptic enabled devices may further include one or more processors that may process or interpret a received haptic output signal before delivering an actuation signal to one or more haptic output devices. Haptic enabled devices may further include user input elements, e.g., control elements such as triggers, buttons, joysticks, joypads, etc., to permit a user to interact with a computer system. Haptic enabled devices may include haptic enabled peripheral and control devices - devices designed to function as accessory or peripheral units to a central device, such as a computer system consistent with embodiments hereof. Haptic enabled devices may also include mobile devices including smartphones, smartwatches, tablets, phablets, and any other mobile computing device. Thus, a haptic enabled device may function as a computer system and may include haptic output devices and control elements.

Haptic output commands may be used to directly or indirectly cause actuation and/or activation of the haptic output devices 202. In accordance with an embodiment hereof, haptic output commands may include haptic output signals, transmitted via wires or wirelessly, to cause a haptic output device to produce a haptic effect. Haptic output signals may include actuation signals received by the haptic output device 202 to cause the haptic effect. Haptic output signals may also include signals transmitted between other system components with information about a desired haptic effect. For example, a remote computer system processor may output a haptic output signal containing information about haptic effects to occur to the processor 200 associated with the haptic enabled device, viz., the mobile device 100. The processor 200 may receive the haptic output signal, process it, and output another haptic output signal to the haptic output device 202 to cause a haptic effect. Thus, a haptic output signal may include any signal to be used for generating a haptic effect. Haptic output commands may further include software commands. That is, a software interaction may generate a haptic output command including information for causing actuation of a haptic output device. A haptic output command in the form of a software command may cause the generation of a haptic output command in the form of a haptic output signal by the processor 200.

The processor 200 may provide haptic output commands to activate the haptic output devices 202. The processor 200 may instruct the haptic output devices 202 as to particular characteristics of the haptic effect which is to be output (e.g., magnitude, frequency, duration, etc.) consistent with the haptic output commands. The processor 200 may retrieve the type, magnitude, frequency, duration, or other characteristics of the haptic effect consistent with the haptic output commands from the memory 205 coupled thereto. The type, magnitude, frequency, duration, and other characteristics of the haptic effect may be selected to provide appropriate feedback to a user, according to embodiments discussed below.

The haptic output devices 202 may include one or more vibration, inertial, and/or kinesthetic actuators as known to those of ordinary skill in the art of haptically enabled devices. Possible actuators include but are not limited to eccentric rotating mass ("ERM") actuators in which an eccentric mass is moved by a motor, linear resonant actuators ("LRAs") in which a mass attached to a spring is driven back and forth, piezoelectric actuators, inertial actuators, shape memory alloys, electro-active polymers that deform in response to signals, mechanisms for changing stiffness, electrostatic friction (ESF), ultrasonic surface friction (USF), any other type of vibrotactile actuator, or any combination of actuators described above.

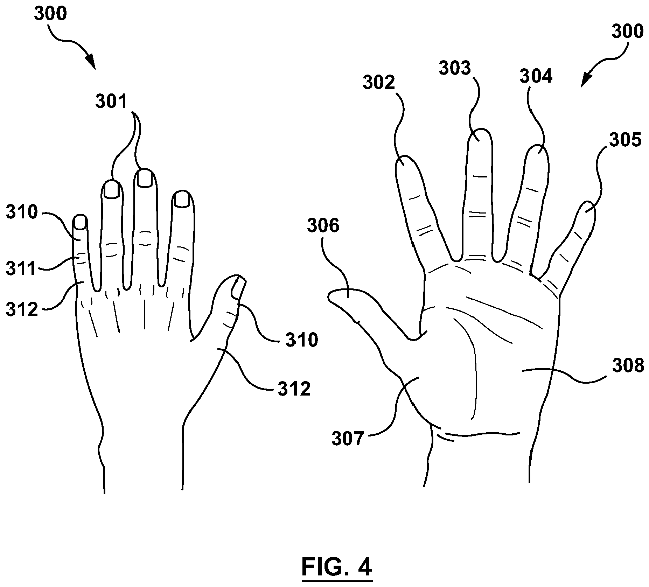

FIG. 4 illustrates the anatomy of a pair of hands 300, illustrating both a palmar and a dorsal view. The hand 300 includes several distinct hand parts. The hand 300 includes five digits 301. The first digit 301 is a thumb 306, and the remaining four digits 301 are fingers, including an index finger 302, a middle finger 303, a ring finger 304, and a little finger 305. Each digit 301 includes a distal phalanx 310 and a proximal phalanx 312. The four fingers 302-305 each also include an intermediate phalanx 311. The thumb 306 further includes a ball of the thumb 307. The hand 300 further includes a palm 308.

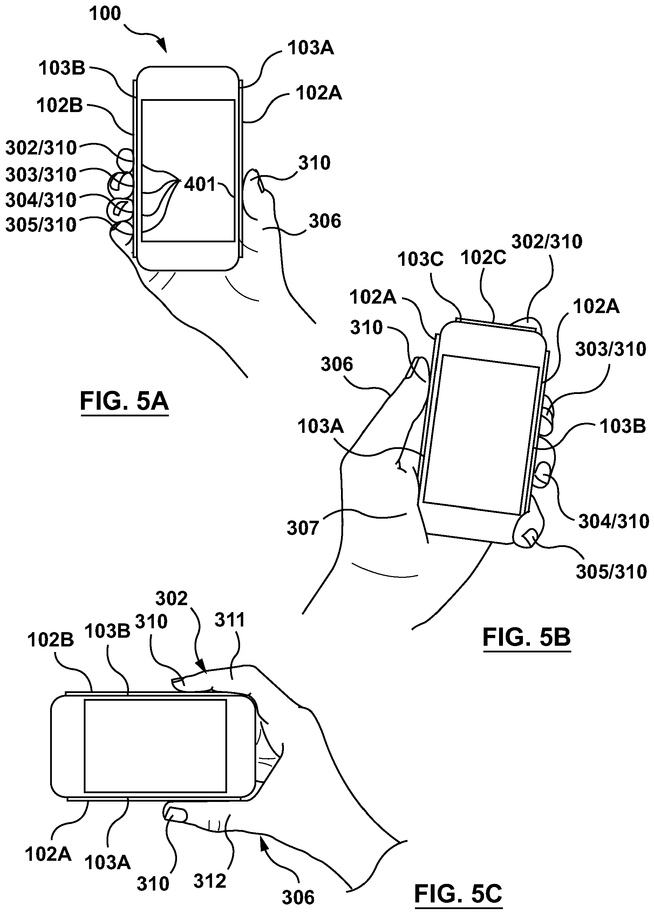

FIGS. 5A-5C illustrate examples of a user grasping the mobile device 100 with a multi-contact touch. FIG. 5A illustrates a user grasping the mobile device 100 with a distal phalanx 310 of the thumb 306 contacting a first user sensing panel 102A on a first sidewall 103A of the mobile device and a distal phalanx 310 of each of the four fingers 302-305 on a second user sensing panel 102B on a second sidewall 103B of the mobile device. FIG. 5B illustrates a user grasping the mobile device 100 with a distal phalanx 310 of the thumb 306 and a ball of the thumb 307 contacting a first user sensing panel 102A on a first sidewall 103A of the mobile device, a distal phalanx 310 of each of three fingers 303-305 contacting a second user sensing panel 102B on a second sidewall 103B of the mobile device 100, and a distal phalanx 310 of an index finger 302 making contact with a third user sensing panel 102C on a third sidewall 103C of the mobile device 100. FIG. 5C illustrates a user grasping the mobile device with a distal phalanx 310 and a proximal phalanx 312 of the thumb 306 making contact with a first user sensing panel 102A on a first sidewall 103A of the mobile device 100 and a distal phalanx 310 and an intermediate phalanx 311 of the index finger 302 making contact with a second user sensing panel 102B on a second sidewall 103B of the mobile device 100. The gripping positions illustrated in FIGS. 5A-5C are exemplary only. The user sensing panels 102A, 102B, 102C associated with the sidewalls 103A, 103B, 103C of the mobile device 100 may be configured to detect a multi-contact touch or multi-presence positioning of any portion of a user's hand.

As discussed above, user sensing panels 102 associated with the mobile device 100 are configured to detect a multi-contact touch and/or multi-presence positioning from various parts of the anatomy of a user's hand. The user sensing panels 102 are further configured to transmit a signal, e.g., a pressure signal, touch signal, proximity signal, contact signal, etc., indicative of the multi-contact touch and/or multi-presence positioning to the processor 200.

The processor 200 is configured to receive the signal indicative of the multi-contact touch and/or multi-presence positioning transmitted by the user sensing panel 102. After receiving the signal, the processor 200 is configured to analyze the signal to determine an intended input of the user, determine a mobile device action associated with the intended input, and cause the mobile device 100 to execute a mobile device action.

To determine an intended input of the user, processor 200 may analyze the signal from the user sensing panel 102 to determine anatomical identities of the digits 301 and other hand parts providing the multi-contact touch and/or multi-presence positioning. The signal may indicate the location(s) of one or more of the digits 301 and other hand parts providing the multi-contact touch and/or multi-presence positioning. The signal may indicate the magnitudes of pressures caused by the one or more of the digits 301 and other hand parts providing the multi-contact touch and/or multi-presence positioning. The signal may further indicate movement of the one or more of the digits 301 and other hand parts providing the multi-contact touch and/or multi-presence positioning. The processor 200 may use one or more of the location, area of contact, magnitude, and movement indications of the signal to determine the anatomical identities of the one or more of the digits 301 and other hand parts. The identified anatomical identities may include any portion of the hand 300 used for gripping the mobile device 100, including all phalanges 310-312 of the digits 301 as well as the ball of the thumb 307 and the palm of the hand 308.

The processor 200 may use the signal indicative of the multi-contact touch and/or multi-presence positioning to determine the anatomical identities of the digits 301 and other hand parts that provided the multi-contact touch and/or multi-presence positioning based on locations of the sensor of the user sensing panel at which pressure or proximity is detected. The location of pressure or proximity detection may refer to the location along the length L of the sidewall 103 and/or may refer to location along the depth D of the sidewall 103, i.e., as illustrated in FIG. 2A. The processor 200 may determine the anatomical identities of digits 301 and of other hand parts, e.g., the ball of the thumb 307, providing pressure or proximity.

The processor 200 parses the signal to determine the component contact points of the multi-contact touch and/or multi-presence positioning. Each digit or other hand part detected, i.e., by contact or proximity, in the signal indicative of the multi-contact touch and/or multi-presence positioning may be represented by a contact point 401. The contact points 401 of the multi-contact touch and/or multi-presence positioning are defined by the characteristics of the detected contact or proximity of the user's digits or other hand parts. For example, a signal indicative of the multi-contact touch and/or multi-presence positioning as illustrated in FIG. 5A defines five contact points 401 on the second sidewall 103B, one for each digit 301. The location and relative spacing of the different contact points 401 is used by the processor 200 to determine the anatomical identity of the gripping part to which each contact point 401 corresponds. Anatomical identities of gripping parts are identified according to the digit 301, portion of a digit 301, e.g., distal phalanx 312, intermediate phalanx 311, or proximal phalanx 310, or other hand part that they represent. The locations of contact points 401 representative of the little finger 305, ring finger 304, middle finger 303, and index finger 302 are typically consecutively located, as it is quite difficult for a user to reverse the positioning of two of these digits 301. The positioning of the contact point 401 representative of the thumb 306 is typically on an opposite sidewall 103, such as first sidewall 103A, from the other digits 301. Relative spacing may also be used to determine anatomical identities. For example, if a sidewall 103 has just three contact points 401, it is likely that either the little finger 305 or the index finger 302 is not in contact with the sensor of the user sensing panel. The processor 200 may determine which digit 301 is not in contact with the sensor based on the relative spacing of the remaining digits 301 with respect to the thumb 306 on the opposite sidewall 103 of the mobile device 200.

According to embodiments using a proximity sensor in a user sensing panel, contact is not required for the sensor to determine the location of a digit 301 or other hand part. In such embodiments, the proximity sensor may detect the location of a digit 301 or other hand part that is either in contact with and/or near the sensor and thereby establish an associated contact point 401. Such embodiments may use the same methods as described above for determining the anatomical identities based on the location of the sensed digits 301 and hand parts.

The processor 200 may use the area of the contact points 401 detected by the user sensing panel 102 to determine the anatomical identities of the digits 301 and other hand parts used to grip the mobile device 100. The various digits 301 and hand parts of a user may vary in size and may thus have a greater area of contact with the user sensing panel 102. A thumb 306 may therefore have a greater area of contact than a little finger 305. A digit 301 that contacts the mobile device 100 with more than one phalanx, as illustrated in FIG. 5C, may have a greater area of contact than a digit 301 that contacts the mobile device 100 with a single phalanx. Accordingly, the processor 200 may use the area of contact information from the sensor of the user sensing panel to determine the anatomical identities of the digits 301 and other hand parts used to grip the mobile device 100.

The processor 200 may use the magnitude of the pressure detected by the sensor of the user sensing panel to determine the anatomical identities of the digits 301 and other hand parts used to grip the mobile device 100. A user may apply varying amounts of pressure with different hand parts when the phone is gripped. For example, when the phone is gripped as in FIG. 5A, the thumb 306 and the index finger 302 may press harder against the user sensing panels 102A, 102B, respectively, then the remaining digits 301 press against the user sensing panel 102B, and therefore generate a higher magnitude pressure.

The processor 200 may use movement indications provided by the sensor of the user sensing panel to determine the anatomical identities of the gripping digits 301 and other hand parts. When grasping the mobile device 100, the user's grip may shift as the user arranges their hand to hold the mobile device 100. The processor 200 may use the movement indicators of the signal indicative of the multi-contact touch representing such grip shifting to determine the anatomical identities of the gripping digits 301 and other hand parts.

According to embodiments hereof, the processor 200 may use multiple aspects of a signal indicative of a multi-contact touch and/or multi-presence positioning to determine anatomical identities of the gripping digits 301 and other hand parts. The processor 200 may combine location information with pressure magnitude information, for example. The processor 200 may use any one or all of the above-discussed aspects of a signal indicative of a multi-contact touch and/or multi-presence positioning to determine anatomical identities of the one or more gripping digits 301 and other hand parts.

According to embodiments hereof, the processor 200 may determine the anatomical identities of the gripping digits 301 and other hand parts according to a trained model. The trained model may be a default model determined according to training data collected from multiple subjects. For example, multiple subjects may be asked to grip the mobile device 100 with a series of different grip positions. While a subject is gripping the mobile device 100, the user sensing panels 102 may detect a multi-contact touch and/or a multi-presence positioning, and provide a responsive signal to the processor 200. Each subject may grip the mobile device 100 in multiple different ways to collect grip data. The processor 200, or another processor located in a separate system, may then aggregate the collected grip data of the multiple subjects for developing a default model. The collected grip data may be associated with the multiple grip positions of the digits 301 and other hand parts used during the generation of the grip data. Thus, the default model may include multiple associations, each between a gripping hand position and a corresponding signal indicative of a multi-contact touch and/or multi-presence positioning. When a user interacts with the mobile device 100 and a user sensing panel 102 generates a signal indicative of a multi-contact touch and/or a multi-presence positioning, the signal may be compared to the default model data to determine the anatomical identities of the gripping digits 301 and other hand parts.

According to embodiments hereof, the trained model may be a user specific model. To generate a user specific model, the processor 200 sends a signal to an audio or video output device 201 (e.g., a screen and/or a speaker) of the mobile device 100 to cause the output device to request that the user grip the mobile device 100 in a specific way. The output device may make multiple requests of the user, requesting that the mobile device 100 be gripped multiple times and with multiple different hand positions. The processor 200 may receive, from the user sensing panel 102, the signal indicative of the multi-contact touch and/or multi-presence positioning, and associate the data of the signal with the different hand positions requested. The processor 200 may thus build a user specific model associating signals indicative of particular multi-contact touch and/or multi-presence positioning with corresponding hand positions of the various stored different hand positions. In an embodiment, building a user specific model may begin with a default model. The user specific model may be built using the default model as a basis. The user specific model may include refinements to the default model based on requests made of the specific user. The user specific model may also include refinements made during use by a user. For example, when a gesture goes unrecognized or a gesture is incorrectly recognized, the user may provide input about an intention of the gesture. The user input may be used to refine the user specific model. A user specific model may be beneficial because different users may have hands that differ significantly from an average hand, i.e., they may be larger or smaller, may have missing digits 301, may have crooked digits 301, etc. A user specific model may thus be effective at permitting the processor 200 to identify the anatomical identities of the gripping digits 301 and other hand parts.

The processor 200 is further configured to associate the signal indicative of the multi-contact touch and/or multi-presence positioning with an action of the mobile device 100. The processor 200 may associate the signal indicative of the multi-contact touch and/or multi-presence positioning with an action of the mobile device 100 by associating any portion of the signal with the action.

In associating a portion of the signal with the action, the processor 200 may recognize a gesture of the user based on the anatomical identities of the gripping digits 301 and hand parts and associate the signal with the action of the mobile device according to the gesture. Gestures may be characterized by movements, pressures, locations, timing, and other characteristics. For example, gestures may be characterized by movements of the user, e.g., sliding a digit 301 along the user sensing panels 102, removing or replacing a digit 301 against the user sensing panels 102, tapping the user sensing panels 102, swiping along the user sensing panels 102, and any other motion of one or more of the gripping digits 301 and hand parts. Thus, for example, a user may gesture by sliding their thumb 306 up or down a user sensing panel 102, or by tapping their index finger 302 on the user sensing panel 102. Gestures may further include increases in pressure of one or more of the digits 301 and gripping hand parts against the user sensing panels 102. For example, the user may press harder with a thumb 306 or index finger 302, as if they were pressing a button on the user sensing panels 102. Gestures may further be characterized by locations of the identified gripping digits 301 and hand parts. For example, a sliding gesture by a digit 301 may be characterized not only by the sliding movement, but by a length of the sliding gesture, i.e., a distance between locations of the digit 301 at a beginning and at an end of the gesture. In a sliding gesture recognized as a volume change, sliding farther may increase the volume more. In a sliding gesture recognized as a video scrubbing gesture, sliding farther may increase scrubbing speed. Gestures may further be characterized by timing. For example, a gesture may be initiated by providing pressure from a digit 301. The length of time over which the pressure is applied may characterize the gesture. In a volume control gesture, the length of time that a digit 301 holds the gesture may cause the volume to continue to increase or decrease until the gesture is released.

When the processor 200 has recognized the anatomical identities of the gripping digits 301 or hand parts, the specific location of the identified anatomy may no longer matter for association with an action of the mobile device 100. When a user grips the mobile device 100, the processor 200 may determine the anatomical identities of the gripping digits 301 and hand parts. Then, recognition of a gesture is based on the identity of the gripping part. Thus, if a user is holding the mobile device 100 slightly differently than usual, recognition of a gesture is unaffected. For example, the grip employed in FIG. 5A could be used higher or lower on the mobile device 100, causing the digits 301 to be located in different places along the sidewalls 103A, 103B of the mobile device 100. When the user performs a gesture, e.g., applying altered pressure with the thumb 306, processor 200 recognizes the gesture as being performed with the thumb 306 and associates the gesture with a mobile device action even if the thumb 306 is out of place. The user is thus pressing a "virtual button" on the virtual button panel or virtual button bar of the mobile device 100, and it is not necessary for the user to arrange the gripping digits 301 over physical buttons. The use of such virtual buttons provides users with hands of different sizes and shapes flexibility in the way in which they interact with their mobile device 100, and eliminates the extensive design work typically needed for locating various buttons and input elements of a conventional mobile device.

According to embodiments hereof, the processor 200 may be configured to associate a mobile device action with both a recognized hand position and with the identified anatomical identities. As discussed above, processor 200 may be configured to recognize a user hand position. Depending on the recognized user hand position, gesture recognition may be altered. For example, in a first hand position, e.g., as shown in FIG. 5A, a gesture comprising altered pressure from the thumb 306 may be associated with a first mobile device action. In a second, different hand position, e.g., as shown in FIG. 5C, a gesture comprising altered pressure from the thumb 306 may be associated with a second mobile device action. In the first hand position, which may be adapted for regular use of the mobile device 100, the thumb gesture including altered pressure may be the equivalent of pressing a home button of the mobile device 100. In the second hand position, which the user may be using when holding the mobile device 100 to view a video, an altereed pressure from the thumb 306 may be associated with a volume control action, a play/pause action, or other action associated with viewing of a video.

According to embodiments hereof, the processor 200 may be configured to associate the signal indicative of the multi-contact touch and/or multi-presence positioning with an action of the mobile device 100 based on gestures performed by a plurality of the gripping digits 301. For example, when a user attempts to increase pressure with a thumb 306 as a gesture, the remainder of the gripping digits 301 and hand parts may also be required to apply altered pressure to balance out the pressure from the thumb 306. The processor 200 may be configured to associate the signal indicative of the pressures applied by one or more of the gripping digits 301 or hand parts with a mobile device action. The user may experience the gesture as altered thumb 306 pressure while the processor 200 is configured to recognize the changes in pressure of one or more of the other gripping digits 301 or hand parts in recognizing the gesture.

According to embodiments hereof, the processor 200 may be configured to associate a signal indicative of the multi-contact touch and/or multi-presence positioning with an action of the mobile device 100 without individually recognizing anatomical identities of the gripping digits 301 and hand parts. When a user performs a gesture, a signal from the one or more user sensing panels 102 may be uniquely characteristic of the gesture and the processor 200 may directly associate the signal with the gesture, and thus with an action of the mobile device 100 without performing the intermediate step of identifying anatomical identities. Association of a signal indicative of a multi-contact touch and/or multi-presence positioning with an action of the mobile device 100 without individually recognizing anatomical identities of the gripping digits 301 and hand parts may be performed according to a model, either a trained default model or a trained user-specific model, as discussed above.

According to embodiments hereof, the processor 200 may be configured to associate a signal indicative of the multi-contact touch and/or multi-presence positioning with an action of the mobile device based on the signal, as discussed above, and an operating mode of the device. For example, a sliding gesture of the index finger 302 may be interpreted as corresponding to a volume changing mobile device action if detected during a phone call and may be interpreted as corresponding to a scrolling action if detected during the use of a web browser. Thus, gesture recognition may be altered according to applications that are executing on the device, including phone call applications, texting applications, video applications, gaming applications, and others.

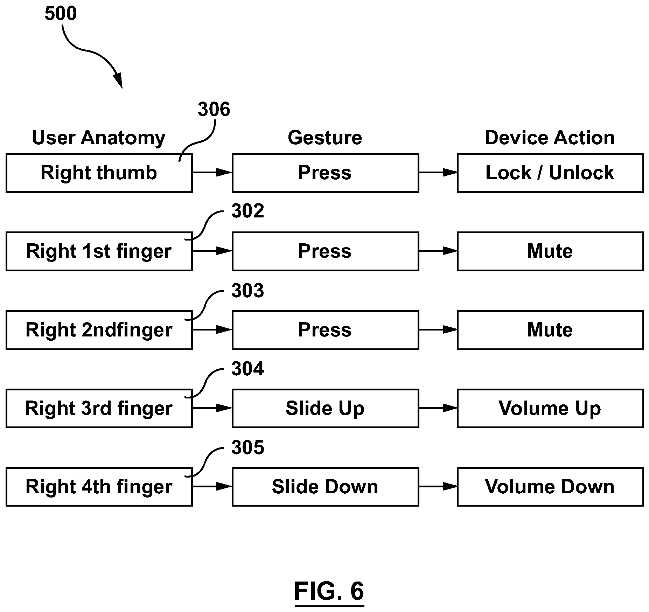

FIG. 6 is an association table 500 illustrating example associations between anatomical identities, performed gestures, and mobile device actions. Processor 200 may identify the anatomical identity of a digit 301 or hand part, identify a gesture performed by the identified digit 301 or hand part, and associate the anatomy and the gesture with a mobile device action to be performed. As shown in FIG. 6, processor 200 may identify anatomical identities based on whether a digit 301 or hand part comes from the left or right hand 300. Multiple different gestures, i.e., pressing with the middle finger 303 or index finger 302, may correspond to the same mobile device action. The associations between the mobile device action, anatomy, and gesture may be preprogrammed and/or may be user-defined. Some examples of identifiable gestures and associated actions may include a press with the thumb 306 for control of a lock/unlock function, a swipe of the thumb 306 to control scrolling, an up or down slide of a ring finger 304 or little finger 305 to control volume up or down, and a press with an index finger 302 or middle finger 303 to mute the mobile device 100. Mobile device actions shown in FIG. 6 are examples only and any action that a mobile device 100 may execute may be associated with a corresponding gesture and anatomy.

The processor 200 is further configured to cause the mobile device 100 to execute the determined mobile device action. After identification of a gesture and association with an action, as discussed above, the processor 200 causes the execution of the action. The processor 200 may directly cause the action, for example, by executing computer instructions and/or may indirectly cause the action, for example, by transmitting a control signal to another aspect of the mobile device 100, e.g., a screen, audio output, antenna, etc., to cause the mobile device action to occur.

According to embodiments hereof, the processor 200 is further configured to cause the output of feedback as confirmation of the identification of the gesture and execution of the mobile device action. Such feedback may include an audio signal, e.g., a beep or tone, a video display, and/or a haptic output. Mobile device 100 may include audio and/or visual output devices 201, as discussed above, to provide the feedback. Mobile device 100 may further include one or more haptic output devices 202 to provide the feedback.

Haptic feedback for confirmation of a mobile device action to be performed may be determined by the processor 200 according to an association between the mobile device action and the haptic feedback. Haptic feedback may also be initiated by processor 200 in response to a recognized gesture. Different mobile device actions and/or different gestures may be associated with different haptic feedback outputs. In accordance with embodiments hereof, one or more different mobile device actions may be associated with a same haptic feedback output. Processor 200 may generate and output a haptic control signal to be received by the one or more haptic output devices 202 to provide confirmation to a user that a gesture was recognized and/or that a mobile device action is performed. The haptic feedback provided as confirmation may be selected to correspond to the recognized gesture. Thus, the haptic feedback provided as confirmation serves two purposes. First, the provision of the haptic feedback in response to the gesture confirms that a gesture was received or recognized. Second, the specific haptic feedback provided may correspond to the recognized gesture, thus confirming to the user the identity of the recognized gesture. Such haptic feedback serves to alert or confirm to the user that the gesture was correctly or incorrectly received.

In accordance with embodiments hereof, the processor 200 may cause haptic feedback upon recognition of the anatomical identities of the digits 301 and other hand parts gripping the mobile device 100. A user may grasp and pick up the mobile device 100. The processor 200, upon recognizing the anatomical identities of the gripping digits 301 and other hand parts based on the signal indicative of the multi-contact touch and/or multi-presence positioning, may provide a haptic output to the user via the haptic output device 202 to confirm to the user that the processor 200 is ready to recognize a gesture of the user. Thus, when the user picks up the mobile device 100 and receives the haptic output, i.e., when the anatomical identities of the grasping digits and other hand parts are recognized by the processor 200, the user then knows that the system is ready to recognize a gesture. If the user picks up the mobile device 100, and the anatomical identities of the grasping digits and other hand parts are not recognized, the processor 200 may provide no haptic feedback and/or may provide haptic feedback specifically associated with a failure to recognize the grasping digits and other hand parts. In such an event, the user may accept the lack of haptic feedback or the specific haptic feedback as an alert that the system is not ready to recognize a gesture. The user may then reposition their hand, for example, to increase the likelihood of recognition.

According to embodiments hereof, the haptic output device(s) may be configured to provide the haptic feedback directly to the grasping digits or other hand parts arranged on the user sensing panels 102. Accordingly, the user sensing panels 102 may function as virtual haptic button panels or virtual haptic button bars.

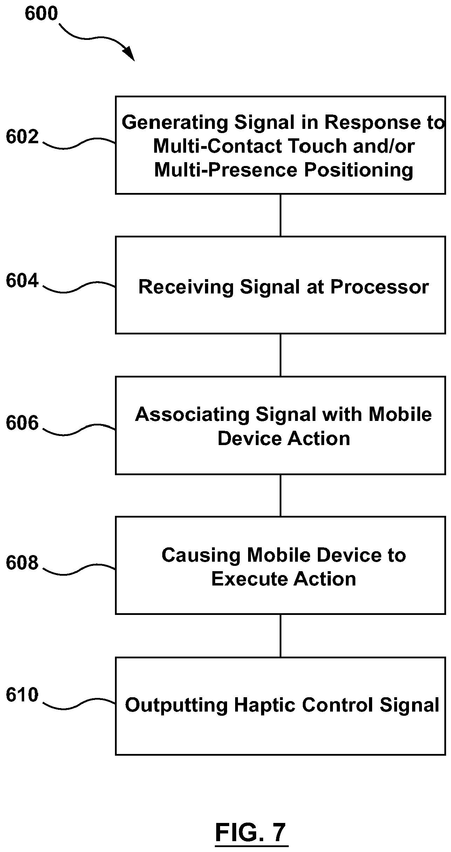

FIG. 7 is a process diagram illustrating functionality of systems described herein in carrying out a method of identifying a multi-contact touch. In embodiments, the functionality of the process diagrams of FIG. 7 may be implemented by software and/or firmware stored in a memory of a mobile device and executed by a processor of the mobile device 100. In other embodiments, the functionality may be performed by hardware, through the use of an application specific integrated circuit ("ASIC"), a programmable gate array ("PGA"), a field programmable gate array ("FPGA"), and/or any combination of hardware and software. It will be understood by one of ordinary skill in the art that the functionality of FIG. 7 may be performed by devices and systems consistent with the mobile device 100, and/or a haptic enabled device or computer system having another configuration as known in the art.

FIG. 7 illustrates a process 600 for identifying a multi-contact touch and/or multi-presence positioning. The process 600 illustrated by FIG. 7 is provided as an example of a method consistent with the devices and systems described herein. The steps and operations of process 600 are described in a particular order for example purposes only. The steps and operations of the process 600 may be performed in a different order, may include additional steps, and may include fewer steps. Although some of the steps and operations of process 600 are described specifically with respect to an embodiment of a user sensing panel including pressure sensors generating pressure signals, no limitation is intended by such description. These steps and operations may equally apply to embodiments of a user sensing panel including alternative sensors, such as proximity sensors generating presence signals.

In an operation 602, process 600 includes generating, by at least one sensor of a user sensing panel of a mobile device, a signal in response to and indicative of a multi-contact touch or multi-presence positioning. For example, a user sensing panel may include a pressure sensor for generating a pressure signal. The generated pressure signal may include information about the locations, magnitudes, area of contact, and movement of digits or other hand parts gripping the mobile device. In further examples, other types of sensors, e.g., proximity sensors, etc., may generate other types of signals.

In an operation 604, process 600 includes receiving, by at least one processor, the signal indicative of the multi-contact touch and/or multi-presence positioning generated by the at least one sensor of the user sensing panel. The signal is generated responsive to a multi-contact touch or multi-presence positioning on at least one sidewall of the mobile device. A first signal may be received from a first sensor of a first user sensing panel disposed on a first sidewall and a second signal may be received from a second sensor of a second user sensing panel disposed on a second sidewall. The mobile device may include a user sensing panel with its respective sensor(s) disposed on four or more sidewalls of a mobile device. Each sidewall may include one or more of user sensing panel(s) with respective sensor(s) disposed thereon. In an embodiment, the processor receives a signal from each sensor. In further embodiments, the processor receives a combined signal from all sensors.

In an operation 606, process 600 includes associating, by the at least one processor, the signal with an action of the mobile device. The signal indicative of the multi-contact touch and/or multi-presence positioning may be associated with an action of the mobile device, such as powering on/off, changing volume, pressing home, etc.

To associate the signal with the action of the mobile device, the anatomical identities of the digits and other hand parts gripping the mobile device may be identified and a gesture performed by the gripping digits and other hand parts may be recognized. Associating the signal with the action of the mobile device may thus include determining anatomical identities of digits and other hand parts that are in contact with or in proximity to the sensors of the user sensing panel. Determining the anatomical identities of the digits and other hand parts may include determining locations at which the sensor detects pressure and/or proximity and determining the anatomical identities of the digits or hand parts corresponding to each location. Determining the anatomical identities of the digits and other hand parts may further include determining pressure magnitudes at locations at which the sensor detects pressure and determining the anatomical identities of the digits or hand parts corresponding to the pressure at each location. A user's grip may be characterized by the location of their digits and other hand parts as well as by the magnitude of pressure exerted, the contact area over which pressure is exerted, and movement of the digits and other hand parts as the grip is established.

According to embodiments hereof, a gesture of the user may be recognized based on the determined anatomical identities. Associating the signal with the mobile device action may then be performed according to the gesture. The gesture may be recognized based on increased pressure, movement, tapping, or other actions of a digit or other hand part. The mobile device action may be associated with a specific gesture performed by a specific recognized digit or other hand part.

According to embodiments hereof, determining the anatomical identities of the gripping digits and other hand parts is performed using a trained model. The model may be a default model and/or may be a user specific model. The trained model may be used to associate the signal indicative of the multi-contact touch and/or multi-presence positioning with a hand of the user. The signal may be compared to a library of signals, each associated with a specific hand position, to identify the hand position of the user and thus the anatomical identities of the gripping digits and other hand parts. A trained model may be used to provide a direct association between a signal and a mobile device action to be performed.

In an operation 608, process 600 includes causing the mobile device to execute the selected mobile device action. A processor of the mobile device may, after making an association between a multi-contact touch and/or multi-presence positioning and a mobile device action, send a control signal to the mobile device aspect responsible for the mobile device action. The mobile device action may be carried out by the processor, and the control signal may be a signal internal to the circuitry and logic of the processor. The processor may send the control signal to another part of the mobile device, e.g., a camera, to execute the selected action.

In an operation 610, process 600 may include outputting, by the at least one processor, a haptic control signal associated with the multi-contact touch and/or multi-presence positioning, the haptic control signal being configured to activate a haptic output device to cause a haptic effect. The processor may output a haptic control signal to cause a haptic effect as confirmation that the multi-contact touch and/or multi-presence positioning was associated with a mobile device action. The haptic effect may serve to signal and/or alert the user that the signal was received by the processor and properly associated with an action. According to embodiments hereof, a different haptic effect may be output as confirmation depending on the mobile device action to be carried out. This may permit the user to experience differentiated confirmations and to understand unambiguously that the intended mobile device action was identified.

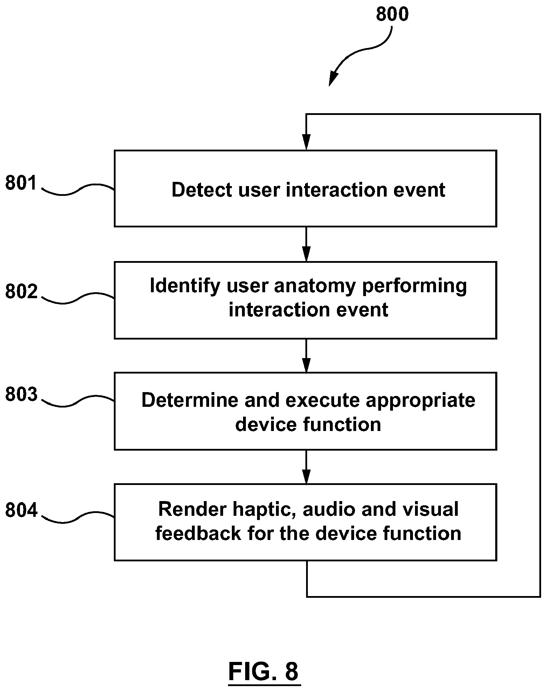

FIG. 8 is a process diagram illustrating functionality of systems described herein in carrying out a method of identifying a multi-contact touch. The functionality of the process diagram of FIG. 8 may be implemented by software and/or firmware stored in a memory of a mobile device and executed by a processor of the mobile device 100. The functionality may also be performed by hardware, through the use of an application specific integrated circuit ("ASIC"), a programmable gate array ("PGA"), a field programmable gate array ("FPGA"), and/or any combination of hardware and software. It will be understood by one of ordinary skill in the art that the functionality of FIG. 8 may be performed by devices and systems consistent with the mobile device 100, and/or a haptic enabled device or computer system having another configuration as known in the art.

FIG. 8 illustrates a process 800 for detecting a user interaction event with a mobile device and providing a response accordingly. The process 800 illustrated by FIG. 8 is provided as an example of a method consistent with the devices and systems described herein. The steps and operations of process 800 are described in a particular order for example purposes only. The steps and operations of the process 800 may be performed in a different order, may include additional steps, and may include fewer steps. Although some of the steps and operations of process 800 are described specifically with respect to an embodiment including of a user sensing panel having pressure sensors generating pressure signals, no limitation is intended by such description. These steps and operations may equally apply to embodiments of user sensing panels including alternative sensors, such as proximity sensors generating presence signals.

In an operation 801, process 800 includes detecting, by at least one sensor of a user sensing panel of a mobile device, a user interaction event. A user interaction event may include a multi-contact touch and/or multi-presence positioning as detected by a user sensing panel. The user sensing panel generates a signal in response to and indicative of the user interaction event. For example, a pressure sensor of the user sensing panel may generate a pressure signal. The generated pressure signal may include information about the locations, magnitudes, area of contact, and movement of digits or other hand parts gripping the mobile device in the user interaction event. In further examples, other types of sensors, e.g., proximity sensors, etc., of a user sensing panel may generate other types of signals.

In an operation 802, process 800 includes identification of the user anatomy performing the interaction event by the processor. The processor may thus determine the anatomical identities of the digits and other hand parts responsible for the interaction event. Identifying the user anatomy performing the interaction event may include determining locations at which the sensor of the user sensing panel detects pressure and/or proximity and identifying the user anatomy corresponding to each location. Identifying the user anatomy performing the interaction event may further include determining pressure magnitudes at locations at which the sensor of the user sensing panel detects pressure and identifying the user anatomy corresponding to the pressure at each location.

In an operation 803, process 800 includes determining and executing a device function appropriate for the interaction event and identified user anatomy. The processor associates the detected interaction event and the identified user anatomy with a function of the mobile device, e.g., powering on/off, changing volume, pressing home, etc. The processor then executes the action of the mobile device.

In an operation 804, process 800 includes rendering feedback associated with the executed device function. Such feedback may include audio, visual, or haptic feedback, or any combination of these. The processor may output a control signal based on any combination of the executed device function, the interaction event, and the identified user anatomy. The control signal may be configured to cause the appropriate output device, e.g., audio, video, and/or haptic, to provide feedback to the user to confirm a haptic control signal associated with the multi-contact touch and/or multi-presence positioning, the haptic control signal being configured to activate a haptic output device to cause a haptic effect. The processor may output a haptic control signal to cause a haptic effect as confirmation that the multi-contact touch and/or multi-presence positioning was associated with a mobile device action. The haptic effect may serve to signal and/or alert the user that the signal was received by the processor and properly associated with an action. According to embodiments hereof, a different haptic effect may be output as confirmation depending on the mobile device action to be carried out. This may permit the user to experience differentiated confirmations and to understand unambiguously that the intended mobile device action was identified.

Additional specific embodiments of the invention are described below.
Embodiment 1 is a mobile device comprising at least one user sensing panel including a pressure sensor configured to generate a pressure signal in response to and indicative of a multi-contact touch; and at least one processor configured to receive the pressure signal indicative of the multi-contact touch generated by the pressure sensor, associate the pressure signal with an action of the mobile device, cause the mobile device to execute the action, and output a haptic control signal associated with the multi-contact touch, the haptic control signal being configured to activate a haptic output device to cause a haptic effect.
Embodiment 2 is the mobile device of embodiment 1, further comprising a screen face, a back face, and a pair of sidewalls, wherein the at least one user sensing panel is located on at least one sidewall of the pair of sidewalls and extends along at least a portion of the at least one sidewall.
Embodiment 3 is the mobile device of embodiment 2, wherein the at least one user sensing panel includes a first user sensing panel and a second user sensing panel, and the pressure sensor is a first pressure sensor of the first user sensing panel and a second pressure sensor of the second user sensing panel, and wherein the first user panel is disposed on a first sidewall of the pair of sidewalls, and the second user sensing panel is disposed on a second sidewall of the pair of sidewalls.
Embodiment 4 is the mobile device of any one of embodiments 1-3, wherein the at least one processor is further configured to associate the pressure signal with the action of the mobile device by determining anatomical identities of digits of a user providing the multi-contact touch.
Embodiment 5 is the mobile device of embodiment 4, wherein the at least one processor is further configured to recognize a gesture of the user based on the anatomical identities and associate the pressure signal with the action of the mobile device according to the gesture.
Embodiment 6 is the mobile device of embodiment 5, wherein the at least one processor is further configured to identify the gesture of the user based on an altered pressure from at least one of the digits.
Embodiment 7 is the mobile device of any one of embodiments 4- 6, wherein the at least one processor is further configured to determine the anatomical identities of the digits according to locations at which pressure is detected by the pressure sensor.
Embodiment 8 is the mobile device of any one of embodiments 4-6, wherein the at least one processor is further configured to determine the anatomical identities of the digits according to magnitudes of pressure detected by the pressure sensor.
Embodiment 9 is the mobile device of any one of embodiments 4-6, wherein the at least one processor is further configured to determine the anatomical identities of the digits according to a trained model.
Embodiment 10 is the mobile device of embodiment 9, wherein the trained model includes associations between a multi-contact touch and a hand position.
Embodiment 11 is the mobile device of embodiment 9 or 10, wherein the trained model includes associations between a multi-contact touch and actions of a mobile device.
Embodiment 12 is a method of dynamically associating user input to a mobile device action, the method comprising generating, by a pressure sensor of at least one user sensing panel of a mobile device, a pressure signal in response to and indicative of a multi-contact touch; receiving, by at least one processor, the pressure signal indicative of the multi-contact touch generated by the pressure sensor, associating, by the at least one processor, the pressure signal with an action of the mobile device, causing, by the at least one processor, the mobile device to execute the action, and outputting, by the at least one processor, a haptic control signal associated with the multi-contact touch, the haptic control signal being configured to activate a haptic output device to cause a haptic effect.
Embodiment 13 is the method of embodiment 12, wherein receiving the pressure signal includes receiving a pressure signal caused by a multi-contact touch on the at least one user sensing panel, wherein the at least one user sensing panel is disposed on at least one sidewall of the mobile device.
Embodiment 14 is the method of embodiment 13, wherein the at least one user sensing panel includes a first user sensing panel and a second user sensing panel, the pressure sensor is a first pressure sensor of the first user sensing panel and a second pressure sensor of the second user sensing panel, and the at least one sidewall is a first sidewall and a second sidewall, and wherein receiving the pressure signal includes receiving a first pressure signal from the first pressure sensor of the first user sensing panel that is disposed on the first sidewall, and receiving a second pressure signal from the second pressure sensor of the second user sensing panel that is disposed on the second sidewall.
Embodiment 15 is the method of embodiment 12 or 13, wherein associating the pressure signal with the action of the mobile device includes determining anatomical identities of digits of a user providing the multi-contact touch.
Embodiment 16 is the method of embodiment 15, further comprising recognizing a gesture of the user based on the anatomical identities; and associating the pressure signal with the mobile device action according to the gesture.
Embodiment 17 is the method of embodiment 16, further comprising recognizing the gesture of the user based on an altered pressure from at least one of the digits.
Embodiment 18 is the method of embodiment 15 or 16, wherein determining anatomical identities of digits includes determining locations at which pressure is detected by the pressure sensor of the user sensing panel and determining anatomical identities of the digits corresponding to each location.
Embodiment 19 is the method of any one of embodiments 15-18, wherein determining anatomical identities of digits includes determining magnitudes of pressure detected by the pressure sensor of the user sensing panel and determining the anatomical identities of the digits corresponding to each magnitude.
Embodiment 20 is the method of any one of embodiments 15-19, wherein determining anatomical identities of digits includes using a trained model.
Embodiment 21 is the method of embodiment 20, wherein using the trained model includes associating the multi-contact touch with a hand position.
Embodiment 22 is the method of embodiment 20 or 21, wherein using the trained model includes associating the multi-contact touch with a mobile device action.

Thus, there is provided devices and methods of dynamically associating user inputs with mobile device actions. While various embodiments according to the present invention have been described above, it should be understood that they have been presented by way of illustration and example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment. Aspects of the above methods of rendering haptic effects may be used in any combination with other methods described herein or the methods can be used separately. All patents and publications discussed herein are incorporated by reference herein in their entirety.

## Claims

1. A mobile device comprising:
at least one user sensing panel including a pressure sensor configured to generate a pressure signal in response to and indicative of a multi-contact touch; and
at least one processor configured to
receive the pressure signal indicative of the multi-contact touch generated by the pressure sensor,
associate the pressure signal with an action of the mobile device,
cause the mobile device to execute the action, and
output a haptic control signal associated with the multi-contact touch, the haptic control signal being configured to activate a haptic output device to cause a haptic effect.

2. The mobile device of claim 1, further comprising:
a screen face, a back face, and a pair of sidewalls,
wherein the at least one user sensing panel is located on at least one sidewall of the pair of sidewalls and extends along at least a portion of the at least one sidewall.

3. The mobile device of claim 2, wherein the at least one user sensing panel includes a first user sensing panel and a second user sensing panel, and the pressure sensor is a first pressure sensor of the first user sensing panel and a second pressure sensor of the second user sensing panel, and
wherein the first user panel is disposed on a first sidewall of the pair of sidewalls, and the second user sensing panel is disposed on a second sidewall of the pair of sidewalls.

4. The mobile device of any one of claims 1 to 3, wherein the at least one processor is further configured to associate the pressure signal with the action of the mobile device by determining anatomical identities of digits of a user providing the multi-contact touch.

5. The mobile device of claim 4, wherein the at least one processor is further configured to recognize a gesture of the user based on the anatomical identities and associate the pressure signal with the action of the mobile device according to the gesture.

6. The mobile device of claim 5, wherein the at least one processor is further configured to identify the gesture of the user based on an altered pressure from at least one of the digits.

7. The mobile device of any one of claims 4 to 6, wherein the at least one processor is further configured to determine the anatomical identities of the digits according to locations at which pressure is detected by the pressure sensor;
or
wherein the at least one processor is further configured to determine the anatomical identities of the digits according to magnitudes of pressure detected by the pressure sensor.

8. The mobile device of any one of claims 4 to 6, wherein the at least one processor is further configured to determine the anatomical identities of the digits according to a trained model;
or
wherein the at least one processor is further configured to determine the anatomical identities of the digits according to a trained model and wherein the trained model includes associations between a multi-contact touch and a hand position;
or
wherein the at least one processor is further configured to determine the anatomical identities of the digits according to a trained model and wherein the trained model includes associations between a multi-contact touch and a hand position and/or wherein the trained model includes associations between a multi-contact touch and actions of a mobile device.

9. A method of dynamically associating user input to a mobile device action, the method comprising:
generating, by a pressure sensor of at least one user sensing panel of a mobile device, a pressure signal in response to and indicative of a multi-contact touch;
receiving, by at least one processor, the pressure signal indicative of the multi-contact touch generated by the pressure sensor,
associating, by the at least one processor, the pressure signal with an action of the mobile device,
causing, by the at least one processor, the mobile device to execute the action, and
outputting, by the at least one processor, a haptic control signal associated with the multi-contact touch, the haptic control signal being configured to activate a haptic output device to cause a haptic effect.

10. The method of claim 9, wherein receiving the pressure signal includes receiving a pressure signal caused by a multi-contact touch on the at least one user sensing panel, wherein the at least one user sensing panel is disposed on at least one sidewall of the mobile device.

11. The method of claim 10, wherein the at least one user sensing panel includes a first user sensing panel and a second user sensing panel, the pressure sensor is a first pressure sensor of the first user sensing panel and a second pressure sensor of the second user sensing panel, and the at least one sidewall is a first sidewall and a second sidewall, and wherein receiving the pressure signal includes
receiving a first pressure signal from the first pressure sensor of the first user sensing panel that is disposed on the first sidewall, and
receiving a second pressure signal from the second pressure sensor of the second user sensing panel that is disposed on the second sidewall.

12. The method of claim 9 or 10, wherein associating the pressure signal with the action of the mobile device includes determining anatomical identities of digits of a user providing the multi-contact touch.

13. The method of claim 12, further comprising
recognizing a gesture of the user based on the anatomical identities; and
associating the pressure signal with the mobile device action according to the gesture.

14. The method of claim 13, further comprising recognizing the gesture of the user based on an altered pressure from at least one of the digits.

15. The method of claim 12 or 13, wherein determining anatomical identities of digits includes determining locations at which pressure is detected by the pressure sensor of the user sensing panel and determining anatomical identities of the digits corresponding to each location.

16. The method of any one of claims 12 to 15, wherein determining anatomical identities of digits includes determining magnitudes of pressure detected by the pressure sensor of the user sensing panel and determining the anatomical identities of the digits corresponding to each magnitude;
and/or
wherein determining anatomical identities of digits includes using a trained model.

17. The method of claim 16, wherein using the trained model includes associating the multi-contact touch with a hand position;
and/or
wherein using the trained model includes associating the multi-contact touch with a mobile device action.
